## Europäisches Patentamt

## European Patent Office

## Office européen des brevets

(11) Veröffentlichungsnummer: **0 226 530**
A2

# (12) EUROPÄISCHE PATENTANMELDUNG

(21) Anmeldenummer: **86730165.7**

(22) Anmeldetag: **20.10.86**

(51) Int. Cl.⁴: **H 01 H 71/04**
**H 02 H 3/04**

(30) Priorität: **08.11.85 US 796560**

(43) Veröffentlichungstag der Anmeldung:
**24.06.87 Patentblatt 87/26**

(84) Benannte Vertragsstaaten: **DE FR GB IT**

(71) Anmelder: **Siemens Aktiengesellschaft Berlin und München**
**Wittelsbacherplatz 2**
**D-8000 München 2 (DE)**

(72) Erfinder: **Alexander, James O.**
**4941 Central Drive Apt. 801**
**Stone Mountain, GA 30083 (US)**

**May, William E.**
**539 Maplewood Drive**
**Laurenceville, GA 30245 (US)**

(54) Anzeigeeinrichtung für den Auslösestatus eines Niederspannungs-Leistungsschalters.

(57) Eine Anzeigeeinrichtung für den Auslösestatus eines Niederspannungs-Leistungsschalters (10) enthält eine Schaltung (20), die ein von der Auslöseeinheit des Leistungsschalters abgegebenes Datensignal in ein Steuersignal für ein Anzeigegerät (16, 17) umwandelt. Vorzugsweise besteht das Anzeigegerät aus einer durchsichtigen Abdeckung (17) und einer daran angebrachten Anzeigeeinheit (16) sowie der erwähnten Schaltung (20). Durch eine Steckvorrichtung ist das Anzeigegerät im Bedarfsfall schnell gegen eine normale Kunststoffabdeckung am Leistungsschalter (10) auswechselbar. Die Schaltung (20) kann einen integrierten programmierbaren Vielfach-Verknüpfungsbaustein enthalten.

FIG. 1

Bundesdruckerei Berlin

EP 0 226 530 A2

**Beschreibung**

Anzeigeeinrichtung für den Auslösestatus eines Niederspannungs-Leistungsschalters

Die Erfindung betrifft eine Anzeigeeinrichtung für den Auslösestatus eines Niederspannungs-Leistungsschalters mit einer Auslöseeinheit, wie sie beispielsweise in der US-A-4 351 012 beschrieben ist. Die Auslöseeinheit enthält einen Mikroprozessor und dient zur Bereitstellung eines Auslösebefehls mit einem von der Höhe des Stromes abhängenden Verzögerung. Ferner gibt die Auslöseeinheit Signale zur Ansteuerung von Leuchtdioden ab, um die Ursache einer Auslöseung des Leistungsschalters zu kennzeichnen. Hierzu enthält der Leistungsschalters mehrere Leuchtdioiden in solcher Schaltung, daß jede vorkommende Auslöseursache durch das Aufleuchten einer bestimmten Leuchtdiode erkennbar ist.

Die beschriebene bekannte Anzeigeeinrichtung für den Auslösestatus ist für den Benutzer des Leistungsschalters eine wichtige Hilfe zum schnellen Erkennen einer Auslöseursache. Es hängt jedoch vom Einsatzgebiet des Leistungsschalters ab, ob eine solche Anzeigeeinrichtung Benötigt wird. Daher wäre es an sich nicht erforderlich, Leistungsschalter grundsätzlich mit einer solchen Anzeigeeinrichtung auszustatten. Auch bei älteren Baureihen von Leistungsschaltern war es jedoch üblich, die seinerzeit benutzten elektromechanischen Anzeigeeinrichtungen zum festen Bestandteil des Schalters zu machen.

Hiervon ausgehend liegt der Erfindung die Aufgabe zugrunde, ein Anzeigegerät für den Auslösestatus als im Bedarfsfall nachrüstbare Einheit auszugestalten. Diese soll sich auf möglichst einfache Weise an einen vorhandenen Leistungsschalter anfügen lassen und damit dem Benutzer die Möglichkeit geben, einen preiswerten Leistungsschalter einer Standardausführung zu erwerben und nur dann eine Anzeigeeinrichtung hinzuzufügen, wenn das Einsatzgebiet des Leistungsschalters dies wünschenswert erscheinen läßt.

Gemäß der Erfindung wird die genannte Aufgabe durch folgende Merkmale gelöst:
Es eine Schaltung zur Überwachung des Leistungsschalters und zur Ausgabe einer Ausgangsgröße vorgesehen, wenn der Leistungsschalter auf einen vorbestimmten Zustand anspricht; ferner ist ein mit dem Leistungsschalter lösbar verbundenes Anzeigegerät zur Bereitstellung einer vorbestimmten sichtbaren Anzeige aufgrund einer Auswertung einer vorbestimmten Ausgangsgröße aus der genannten Schaltung vorgesehen. Somit werden diejenigen Teile der Anzeigeeinrichtung, die zur Aufnahme und Auswertung eines von der Auslöseeinheit des Leistungsschalters abgegebenen Datensignals sowie zur sichtbaren Darstellung des Ergebnisses der Auswertung dienen, zu einer nachrüstbaren Einheit zusammengefaßt. Dementsprechend verringern sich die Kosten für die Standardausführung eines Leistungsschalters.

Um die im Bedarfsfall erwünschte Ergänzung eines Leistungsschalters besonders einfach durchführen zu können, kann nach einer Weiterbildung der Erfindung das Anzeigegerät eine mit dem Leistungsschalter durch eine Steckverbindung lösbar verbunde Anzeigeeinheit aufweisen, wobei die Steckverbindung in Eingriff bringbare Teile aufweist, von denen der eine Teil mit der Anzeigeeinheit und der andere Teil mit dem Leistungsschalter verbunden ist.

An Leistungsschaltern sind durchsichtige Abdekkungen gebräuchlich, um die Einstellelemente der elektronischen Auslöseeinheit zu schützen. Es erweist sich als vorteilhaft, die Anzeigeeinheit zusammen mit der erwähnten Schaltung an einer solchen Abdeckung anzubringen, so daß es möglich ist, die Abdeckung der Standardausführung des Leistungsschalters zu entfernen und durch eine mit der Anzeigeeinheit versehene Abdeckung zu ersetzen.

Für den Benutzer gleichermaßen brauchbar sind Anzeigeeinheiten auf der Basis von Flüssigkristallelementen oder Leuchtdioden. Es sind Anzeigeeinheiten zur Darstellung von zwei Zeichen ausreichend, da sich mit zwei Zeichen zu kennzeichnende Zustände des Leistungsschalters deutlich darstellen lassen.

Wie bereits erwähnt, enthält die Anzeigeeinrichtung eine Schaltung zur Überwachung des Leistungsschalters und zur Ausgabe einer Ausgangsgröße, wenn der Leistungsschalter auf einen vorbestimmten Zustand anspricht. Hierbei kann als Ausgangsgröße ein von einer Auslöseeinheit des Leistungsschalters ausgegebenes Datensignal für den Auslösestatus dienen und es kann eine Überwachungsschaltung für das Datensignal vorgesehen sein, die das Signal aufgrund eines vorgewählten Zustandes des Leistungsschalters festhält und eine weitere Ausgangsgröße erzeugt, wobei eine Decodierungsschaltung für die weitere Ausgangsgröße der Überwachungsschaltung zur Bereitstellung eines Steuergröße zur selektiven Ansteuerung der Anzeigeeinheit vorgesehen ist. Für die unterschiedlichen Auslöseursachen können ein erstes, ein zweites und ein drittes Datensignal vorgesehen sein, wobei die Überwachungsschaltung einen ersten, einen zweiten und einen dritten Flipflop zur Aufnahme dieser Datensignale aufweist und wobei einander komplementäre Ausgangsgrößen ausgegeben werden.

Im einzelnen können eine Taktschaltung sowie ein UND-Gatter vorgesehen sein, dessen Ausgang mit dem Takteingang jedes der Flipflops verbunden ist und das einen mit der Taktschaltung verbundenen Eingang besitzt, wobei der andere Eingang mit einem oder mehreren der Flipflops verbunden ist, wodurch Taktimpulse für die Flipflops selektiv gesteuert und diese gesperrt werden.

Die Decodierungseinrichtung kann eine Vielzahl von UND-Gattern mit jeweils drei Eingängen umfassen, die mit den Ausgängen der Flipflops verbunden sind und deren Ausgänge einer Vielzahl von ODER-Gattern eingegeben werden, wodurch eine vorgewählte Kombination von Datensignalen eine vorgewählte Ausgangsgröße an den ODER-Gattern erzeugt.

Zur Verringerung des schaltungstechnischen Aufwandes empfiehlt es sich, zum Empfangen und Festhalten des Datensignals, zur Bildung der Decodierungsschaltung und zur Abgabe der Steuergrößen für die Anzeigeeinheit einen integrierten programmierbaren Vielfach-Verknüpfungsbaustein zu verwenden, wobei eine Taktschaltung sowohl zur Ansteuerung des Verknüpfungsbausteins, als auch zur Abgabe von Taktimpulsen an die Anzeigeeinheit vorgesehen ist.

Die Erfindung wird im folgenden anhand des in den Figuren dargestellten Ausführungsbeispieles näher erläutert.

Die Figur 1 ist eine vereinfachte isometrische Ansicht eines Leistungsschalters mit einer Anzeigeeinrichtung für den Auslösestatus.

Die Figur 2 ist eine isometrische Ansicht der Anzeigeeinrichtung den Auslösestatus.

Die Figur 3 ist eine schematische Seitenansicht einer Anzeigeeinrichtung für den Auslösestatus zur Darstellung der Verbindung mit einer Leiterplatte im Inneren des Leistungsschalters.

Die Figur 4 ist ein Blockschaltbild einer Anzeigeeinrichtung für den Auslösestatus.

Die Figur 5 ist ein schematisches Schaltbild eines Anzeigegerätes für den Auslösestatus, das Eingangssignale von der Auslöseeinheit des Leistungsschalters erhält und ein Anzeigefeld erleuchtet.

Die Figur 6 veranschaulicht die Segmente der Anzeigeeinheit bei dem Ausleuchten unter unterschiedlichen Bedingungen.

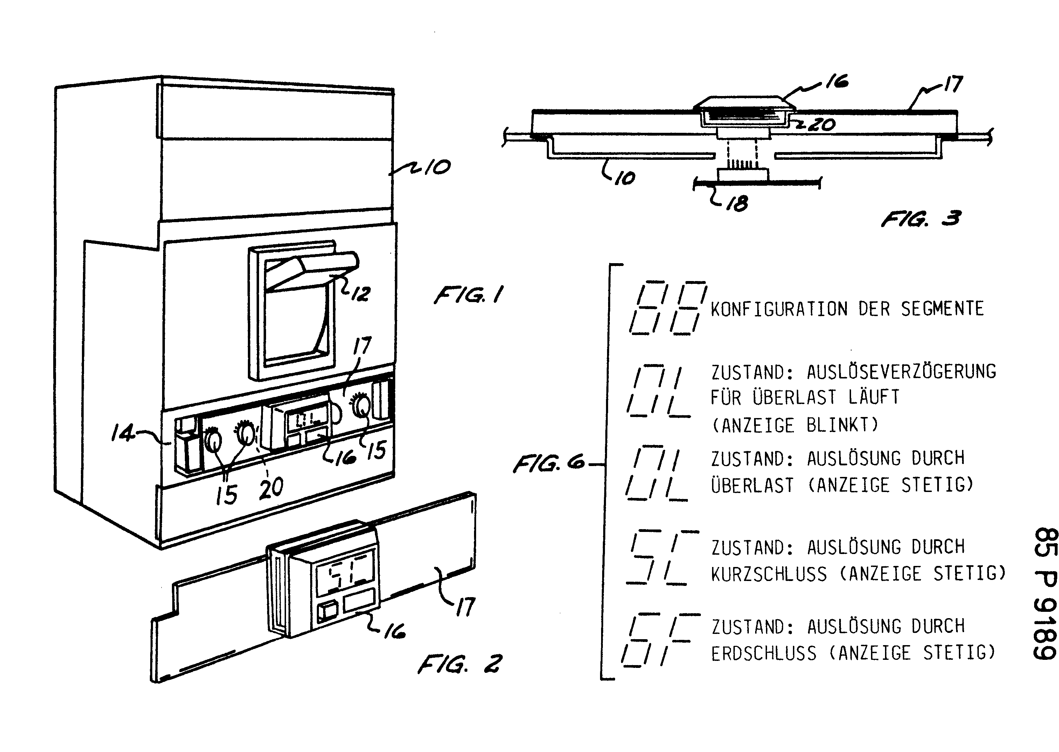

Ein in der Figur 1 gezeigter Niederspannungs-Leistungsschalter 10 besitzt einen Bedienungshandgriff 12 zum Einschalten und Ausschalten von Hand, ferner eine Bedienungstafel 14 mit einer Reihe von Einstellorganen 15 sowie eine Anzeigeeinheit 16, die den Status der Auslöseeinheit des Leistungsschalters anzeigt, die im Inneren des Leistungsschalters 10 angeordnet ist. Der Leistungsschalter 10 gehört vorzugsweise der Bauart mit Isolierstoffgehäuse (MCCB) an, die eine Auslöseeinheit mit einem Mikroprozessor aufweist und die logische Signale aufgrund der unterschiedlichen Zustände des Leistungsschalters abgibt, z. B. wenn der Leistungsschalter aufgrund eines Erdschlusses oder eines Überstromes auslöst.

Der Figur 2 ist näher zu entnehmen, daß die Anzeigeeinheit 16 in einem Kunststoffteil 17 eingegossen oder daran angebracht ist. Das Kunststoffteil 17 ist vorzugsweise durchscheinend ausgebildet, so daß die Einstellorgane 15 des Leistungsschalters 10 durch den Kunststoff hindurch sichtbar sind.

Die Anzeigeeinheit 16 nach den Figuren 1 bis 3 weist einen Verbindungsstecker auf, der mit Kontaktstiften auf einer Leiterplatte 18 des Leistungsschalters 10 in Eingriff zu bringen ist. Die Anzeigeeinheit 16 besitzt ihrerseits eine Leiterplatte mit einer Schaltung 20, die aus der Auslöseeinheit des Leistungsschalters 10 stammende digitale Signale in Signale zur Ansteuerung der Anzeigeeinheit 16 umwandelt. Auf diese Weise können aus zwei Buchstaben bestehende Wörter durch Ansteuerung bestimmter Segmente der Anzeigeeinheit 16 gebildet werden. Die Segmente werden so zum Erscheinen gebracht, daß z. B. die Buchstaben OL für die verzögerte Auslösung bei Überlast aufleuchten, wobei die Buchstaben OL während des Ablaufes der Verzögerungszeit blinken, dagegen nach erfolgter Auslösung stetig leuchten. Ferner werden die Segmente zur Darstellung der Buchstaben SC zur Anzeige einer Kurzschlußauslösung angesteuert, während die Buchstaben GF zur Anzeige der Auslösung bei einem Erdschluß aufleuchten. In der Figur 6 ist dargestellt, wie einzelne Segmente zur Darstellung der genannten Kenn zeichnungen benutzt werden.

Wie die Figur 3 zeigt, ist die Leiterplatte 18 mit darauf befindlichen Kontaktstiften im Inneren des Leistungsschalters 10 und die Anzeigeeinheit 16 an der Außenseite des Leistungsschalters derart angeordnet, daß die Anzeigeeinheit von der Außenseite des Leistungsschalters 10 an diesen angesteckt werden kann. Die Kunststoffabdeckung 17 besitzt vorzugsweise Öffnungen an beiden Enden zur Aufnahme von Schrauben, um die Kunststoffabdeckung 17 an der Frontseite des Leistungsschalters 10 befestigen zu können. Die Kunststoffabdeckung 17 und die Anzeigeeinheit 16 passen vorzugsweise in eine Ausnehmung an der Frontseite des Leistungsschalters derart, daß die Kunststoffabdeckung 17 im wesentlichen bündig mit der Frontseite des Leistungsschalters abschließt. Auf diese Weise wird eine die Anzeigeeinheit umaufdringlich in das Erscheinungsbild des Leistungsschalters einbezogen.

Wie das Blockschaltbild gemäß der Figur 2 zeigt, enthält die Schaltung 20 eine Überwachungsschaltung 22 für die von der Auslöseeinheit des Leistungsschalters ausgehenden Datensignale, in der die Signale gelesen und zur Weiterverarbeitung festgehalten bzw. gespeichert werden (latch). Eine Rückstellschaltung 23 ist in der Weise vorgesehen, daß die Überwachungsschaltung 22 zurückgesetzt werden kann, z. B. wenn der Leistungsschalter 10 nach der Auslösung zurückgestellt wird. Nachdem das Signal gelesen und festgehalten ist, wird ein Ausgangssignal zu einer Decodier- und Treiberschaltung 24 gesandt. Der Betrieb dieser Schaltung 24 sowie der Überwachungsschaltung 22 wird durch eine Taktschaltung 40 gesteuert. Nach der Verarbeitung des Signals veranlaßt die Decodier- und Treiberschaltung 24 eine optische Anzeige des Grundes der Auslösung des Leistungsschalters 10. Die Anzeigeeinheit wird durch eine Batterie 26 betrieben, wobei eine Batterieüberwachungsschaltung 28 vorgesehen ist. Die Schaltung 20 ist für geringen Stromverbrauch ausgelegt. Es ist daher zu erwarten, daß die kleine zum Betrieb der Anzeige benötigte Batterie im praktischen Einsatz länger als ein Jahr halten wird. Bei einer solchen Lebensdauer steht genügend Zeit zur Verfügung, die Batterie anläßlich einer Wartung des Leistungsschalters 10 zu prüfen.

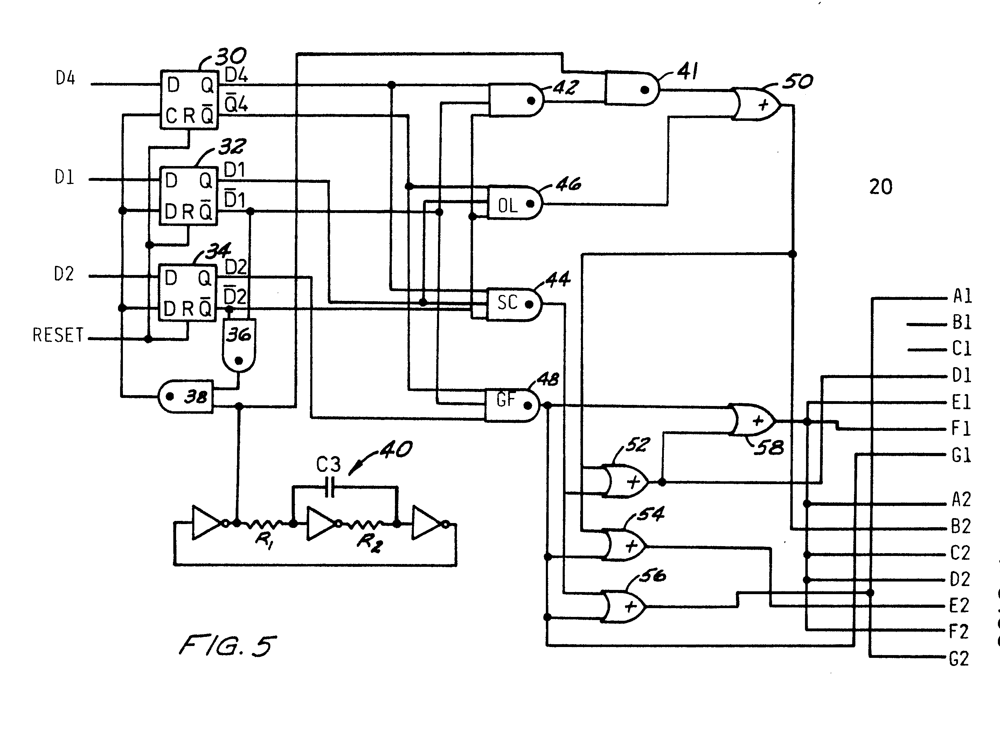

Einzelheiten der Schaltung 20 werden nun anhand der Figur 5 erläutert. Die Schaltung 20 enthält Mittel zur Überwachung der Auslöseeinheit des Leistungsschalters, insbesondere Flipflop-Schaltungen 30, 32 und 34. Jede dieser Flipflop-Schaltungen besitzt einen mit der Taktschaltung 40 verbundenen Takteingang sowie einen Rücksetzeingang. Die Rücksetzeingänge sind miteinander und mit dem Leistungsschalter 10 verbunden, daß die Schaltung 20 bei der Rückstellung des Leistungsschalters nach einem Auslösevorgang ebenfalls zurückgestellt wird. Die jedem Flipflop eingegebenen Daten sind entweder eine logische Null oder eine logische Eins.

Z. B. ergibt für den Flipflop 30 die Eingangsgröße D0 (D-Null) eine Ausgangsgröße an dem Q-Ausgang des Flipflop 30, die D0 beträgt und eine Ausgangsgröße an dem Q-komplementären Ausgang (Q-not), die den Komplementärwert zu D0 bildet (D0-not). Dies bedeutet, daß die Q-Ausgangsgröße Null ist, wenn die D0-Eingangsgröße Null ist und daß der Q-not-Ausgang Eins beträgt, wenn der D0-Eingang Eins ist, ferner der Q-Ausgang Eins beträgt und der Q-not-Ausgang Null. Die Flipflop 32 und 34 arbeiten in derselben Weise wie das Flipflop 30 mit jeweils den Eingangsgrößen D1 und D2.

Der Q-not-Ausgang des Flipflops 32 und der Q-not-Ausgang des Flipflops 34 sind die Eingangsgrößen eines für zwei Eingänge vorgesehenen UND-Gatters 36. Der Ausgang des UND-Gatters 36 ist einer der Eingänge eines weiteren UND-Gatters 38 mit zwei Eingängen. Der andere Eingang des UND-Gatters 38 ist der Ausgang der Taktschaltung 40. Diese enthält drei Inverter und zwei in einer Schleife geschaltete Widerstände, wobei jeder Widerstand in Reihe zwischen die Inverter geschaltet ist. Ein Kondensator ist parallel zu einem Reihenschaltungsteil der Schleife geschaltet, der einen Inverter und einen Widerstand enthält. Der Ausgang des UND-Gatters 38 ist an die Takteingänge der Flipflops 30, 32 und 34 angeschlossen. Wenn der Leistungsschalter in Betrieb ist und nicht ausgelöst hat, sind die Eingänge D0, D1 und D2 logische Nullen und die Q-not-Ausgänge der Flipflops 32 und 34 sind logisch Eins, welche die Eingänge für das UND-Gatter 36 bilden. Der Ausgang des UND-Gatters 36 ist dann logisch Eins und die Taktimpulse aus der Taktschaltung 40 werden über das UND-Gatter 38 an die Takteingänge aller drei Flipflops angelegt. Wenn der Eingang D0 logisch Eins wird, hat dies keine Auswirkung auf den Ausgang des UND-Gatters 38. Wenn entweder der Eingang D1 oder der Eingang D2 von Null auf Eins übergeht, nimmt das UND-Gatter den Wert Null an, was die Taktimpulse unterbricht und hierdurch die Signale festhält (speichert; "latch").

Impulse aus der Taktschaltung 40 werden auch dem UND-Gatter 41 eingegeben, das Teil des Netzwerkes ist, welches die Datensignale D0, D1 und D2 decodiert und auch das Blinken der Anzeige veranlaßt, wie noch näher erläutert wird. Der Q-Ausgang des Flipflop 30 ist mit dem Zeitgeber-UND-Gatter 41 verbunden und mit dem Kurzschluß-UND-Gatter 44. Der Q-not-Ausgang des Flipflops 30 ist mit dem UND-Gatter 46 für die stetige Überlastanzeige und mit dem UND-Gatter 48 für die Erdschlußanzeige verbunden. Der Q-not-Ausgang des Flipflops 32 ist mit den UND-Gattern 46 und 44 verbunden. Der Q-Ausgang des Flipflops 32 ist mit den UND-Gattern 42 und 48 sowie mit dem UND-Gatter 36 verbunden. Der Q-Ausgang des Flipflops 34 ist mit dem Und-Gatter 48 verbunden, während der Q-not-Ausgang des Flipflops 34 mit dem UND-Gatter 36 sowie mit den UND-Gattern 42, 44 und 46 verbunden ist. Die verschiedenen Signale sind bei den erwähnten Gattern durch ihre Symbole angegeben. Demnach weist das Zeitgebergatter 42 die Signale D0, D1-not und D2-not auf, während das Gatter 44 die Signale D0, D1 und D2-not erhält. Das UND-Gatter 46 erhält D0-not, D1 und D2-not, während das Gatter 48 D0-not, D1-not und D2 erhält. Der Ausgang des Gatters 42 ist mit dem zweiten Eingang des UND-Gatters 41 verbunden und der Ausgang des UND-Gatters 41 ist mit dem ODER-Gatter 50 verbunden. Der Ausgang des ODER-Gatters 50 gelangt zu den Eingängen der ODER-Gatter 52 und 54. Der Ausgang des ODER-Gatters 50 ist ferner mit dem Anzeigesegment B2 verbunden. Der Ausgang des Gatters 46 ist mit dem zweiten Eingang des ODER-Gatters 50 verbunden. Der Ausgang des ODER-Gatters 44 gelangt zu den Eingängen der ODER-Gatter 52 und 56. Der Ausgang des UND-Gatters 48 ist mit dem Eingang der ODER-Gatter 54 und 56 sowie mit dem ODER-Gatter 58 verbunden. Der Ausgang des ODER-Gatters 48 ist ferner mit dem Anzeigesegment G1 verbunden.

Der Ausgang des ODER-Gatters 52 ist mit dem anderen Eingang des ODER-Gatters 58 und mit dem Anzeigesegment D1 verbunden. Der Ausgang des Oder-Gatters 54 ist mit dem Segment E2 und der Ausgang des Oder-Gatters 56 mit den Segmenten A1 und G2 verbunden. Der Ausgang des Oder-Gatters 58 ist mit den Segmenten E1, F1, A2, C2, D2 und F2 verbunden. Auf diese Weise decodieren die Gatter 41 bis 58 die digitalen Eingangssignale D0, D1 und D2 und steuern die Anzeigesegmente an. Somit ist es klar, daß die Gatter 41 bis 58 derart geschaltet sind, daß sie die Eingangssignale decodieren und die Anzeigeeinheit ansteuern, um spezifische Kombinationen von Eingangssignalen in eine spezifische Anzeige umzuwandeln. Durch eine abgewandelte Schaltung der Gatter oder eine Verwendung zusätzlicher Gatter kann eine Anzeige mit zusätzlichen Zeichen zur Anzeige einer umfassenderen Information erreicht werden. Praktisch gibt es keine Begrenzung für den Umfang einer anschaulichen Anzeige, jedoch ist für den vorliegenden Zweck eine Anzeige mit zwei Zeichen völlig ausreichend und kommt mit einem Minimum an Raum und Energie aus.

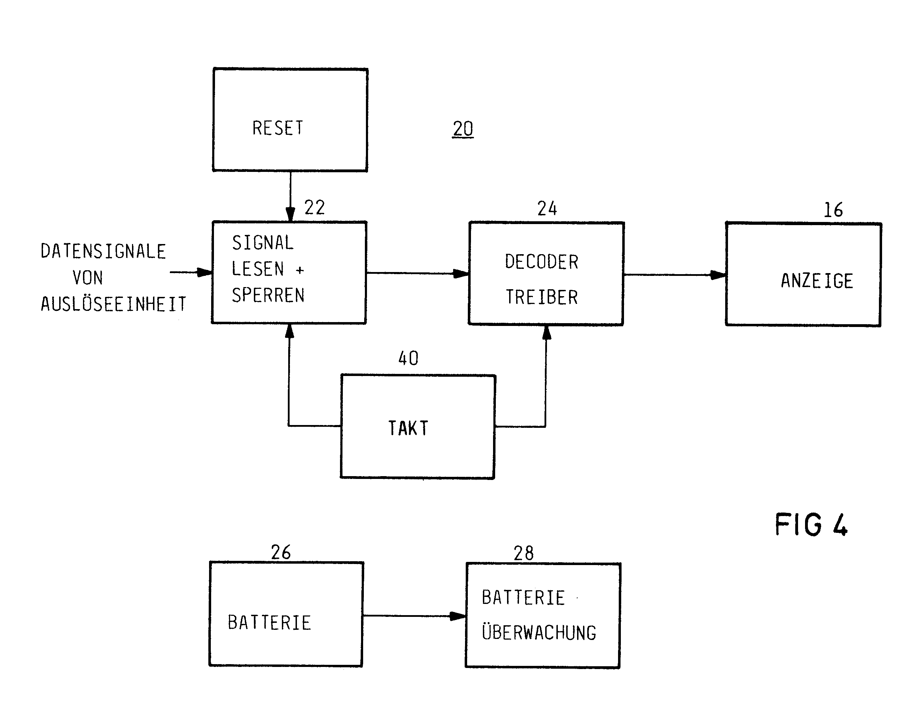

Unter Bezugnahme auf das Blockschaltbild ge-mäß der Figur 4 enthält das Anzeigegerät die visuelle Anzeige und kann auch ein einziges integriertes programmierbares Vielfachgatter enthalten, welches das Datenstatussignal empfängt und festhält. Eine solche integrierte Logikschaltung decodiert das festgehaltene Datensignal und steuert die optische Anzeigeeinheit. Die logischen Schaltungen des Vielfachgatters werden durch eine Taktschaltung betrieben, die auch die Taktimpulse für die Anzeigeeinheit liefert.

Die Benutzung und der Betrieb des Anzeigegerätes ist einfach und unkompliziert. Das an der Kunststoffplatte 17 angebrachte Anzeigegerät wird an einem vorhandenen Leistungsschalter nach Entfernung der durchsichtigen Kunststoffabdeckung ein gesteckt. Danach kann diese Anordnung an dem Leistungsschalter mit zwei Schrauben befestigt werden. Da die Anzeigeeinheit 16 und die Schaltung 20 eine Einheit bilden, die an der Kunststoffplatte angebracht ist, bedarf es keiner Verdrahtung. Die Prüfstifte auf der Leiterplatte 18 gehören zum Leistungsschalter und sind demnach bereits vorhanden, so daß es nur erforderlich ist, die Anzeigeeinheit an der vorgesehenen Stelle einzustöpseln. Danach ist die Schaltung 20 betriebsbereit.

Die Schaltung 20 enthält drei Dateneingänge D0, D1 und D2 sowie eine Rückstelleitung. Im normalen Betrieb des Leistungsschalters und ohne Auslösung aufgrund eines Überstromes, eines Kurzschlusses oder eines Erdschlusses, betragen die Dateneingangsgrößen D0, D1 und D2 sämtlich logisch Null. Die Q-Ausgänge der Flipflops 30, 32 und 34 betragen ebenfalls logisch Null und die Q-not-Ausgänge der Flipflops betragen logisch Eins. Der Q-not-Ausgang des Flipflop 30 ist mit dem einen Eingang des mit drei Eingängen versehenen UND-Gatters 46 und mit einem Eingang des mit gleichfalls drei Eingängen versehenen UND-Gatters 48 verbunden. Da einer der drei Eingangsgrößen für jedes der UND-Gatter 46 und 48 logisch Null beträgt, ist die Ausgangsgröße des Gatters gleichfalls logisch Null. Da somit eine Eingangsgröße des UND-Gatters 41 Null beträgt und seine Ausgangsgröße Null ist, sind beide Eingangsgrößen des ODER-Gatters 54 Null und dessen Ausgangsgröße ist gleichfalls Null, so daß das Segment D2 nicht erleuchtet ist. Im normalen Betrieb ist demnach keines der Segmente erleuchtet und es ist keine optische Anzeige sichtbar. In diesem Zustand ist die Ausgangsgröße Q-not der Flipflops 32 und 34 logisch Eins, was den Ausgang des UND-Gatters 36 veranlaßt, logisch Eins anzunehmen. Da die Taktschaltung arbeitet, beträgt seine Eingangsgröße zu dem UND-Gatter 38 logisch Eins, wodurch allen drei Flipflops ein Taktsignal zugeführt wird.

Sollte sich das Datensignal D0 von logisch Null auf logisch Eins ändern, würde der Q-Ausgang des Flipflops 30 von Null auf Eins übergehen und der Q-not-Ausgang von Eins auf Null. Der Q-Ausgang wird den UND-Gattern 42 und 44 als Eingangsgröße eingegeben. Hierauf würde das Und-Gatter 42 ansprechen, weil jede seiner drei Eingangsgrößen logisch Eins wären. Der Ausgang des Gatters 42 wird dem UND-Gatter 41 zugeführt zusammen mit Impulsen aus der Taktschaltung 40. Auf diese Wiese geht der Ausgang des UND-Gatters 41 bei jedem Taktimpuls von Null auf Eins. Die Ausgangsgröße des UND-Gatters 41 wird von einem der Eingänge des ODER-Gatters 50 aufgenommen. Da die andere Eingangsgröße des ODER-Gatters 50 die Ausgangsgröße des UND-Gatters 46 ist, die Null bei dem angegebenen Zustand beträgt, d. h. D0 = Eins, D1 = Null und D2 = Null, wird das ODER-Gatter 50 durch das Gatter 40 gesteuert, das seinerseits durch die Taktimpulse gesteuert wird. Die Ausgangsgröße des ODER-Gatters 50 bringt das Segment B2 direkt zum Aufleuchten, ebenso die Ausgangsgrößen der ODER-Gatter 52, 54 und 58 die Segmente D1, E1, F1, A2, C2, D2, E2 und F2.

Somit werden die Segmente D1, E1 und F1 sowie die Segmente A2, B2, C2, E2 und F2 erleuchtet, was die Zeichen "OL" (overload) für Überlast ergibt, wenn die Eingangsgröße des Flipflops 30 eine logische Eins ist. Das Datensignal D0 ist ein Signal, welches anzeigt, daß der Leistungsschalter einer Belastung unterliegt, die über der Nennbelastung liegt, jedoch der Last noch nicht einer zur Auslösung ausreichenden Dauer ausgesetzt war, was die Sichtanzeige zum Blinken bringt. Die Anzeige blinkt, weil die Taktschaltung 40 das UND-Gatter 41 wirksam macht, welches die Anzeige entsprechend den Taktimpulsen zum Aufleuchten bringt.

Wenn die Eingangsgröße des Flipflop 32 logisch Eins ist, und die Eingangsgrößen der Flipflops 30 und 34 Null betragen, erscheint an dem UND-Gatter 36 eine Ausgangsgröße, die mit dem ODER-Gatter 50 gekuppelt ist, welches dieselben Anzeigesegmente wie zuvor ansteuert und dadurch die sichtbre Anzeige "OL" (overload) für Überlast ergibt. Jedoch blinkt die Anzeige nicht, weil die Segmente über die Gatter 46 und 50 ohne Unterstützung oder Störung durch das Gatter 41 gesteuert werden. Wenn die Anzeige nicht blinkt, wird ein dauerndes "OL" angezeigt mit der Bedeutung, daß der Leistungsschalter aufgrund einer Überlastung ausgelöst hat. Die blinkende "OL"-Anzeige kann daher sichtbar sein, ohne daß der Leistungsschalter tatsächlich ausgelöst hat. Ist die Auslösung erfolgt, so blinkt die "OL"-Anzeige nicht.

Wenn die Eingangsgröße des Flipflops 34 logisch Eins ist und die Eingänge der Flipflops 30 und 32 logisch Null sind, wird das UND-Gatter 48 wirksam gemacht, welches die verschiedenen Segmente zur Darstellung der Buchstaben "GF" (ground fault) durch die UND-Gatter 54, 56 und 58 ansteuert. Dies zeigt an, daß der Leistungsschalter aufgrund eines Erdschlusses ausgelöst hat. Wenn ein Kurzschluß auftritt, nehmen die Dateneingangssignale D0 und D1 den Wert Eins an, während D2 Null bleibt. Diese Datensignale machen das UND-Gatter 44 wirksam, das seinerseits die ODER-Gatter 52, 56 und 58 wirksam macht.

Diese ODER-Gatter bringen dann die Segmente der Anzeigeeinheit zum Aufleuchten, welche die Zeichen "SC" für Kurzschluß (short circuit) zum Erscheinen bringt. Falls aus irgend einem Grund die Eingangsgrößen D0 und D2 beide Eins betragen, wird keine Ausgangsgröße abgegeben. In ähnlicher Weise erscheint keine Ausgangsgröße, wenn die Dateneingangsgrößen D1 und D2 beide logisch Eins sind.

Aus der vorstehenden Beschreibung geht hervor, daß bestimmte Merkmale der Erfindung nicht auf die speziellen Einzelheiten des beschriebenen Ausführungsbeispieles beschränkt sind und daher Abwandlungen oder andere Anwendungen dem Fachmann zur Verfügung stehen. Dementsprechend sollen die Ansprüche alle diese Abwandlungen und Anwendungen erfassen, soweit sie nicht vom tatsächlichen Inhalt der Erfindung abweichen.

**Patentansprüche**

1. Anzeigeeinrichtung für den Auslösestatus eines Niederspannungs-Leistungsschalters (10) mit einer Auslöseeinheit, **gekennzeichnet durch** folgende Merkmale:

- Eine Schaltung (20) zur Überwachung des Leistungsschalters (10) und zur Ausgabe einer Ausgangsgröße, wenn der Leistungsschalter (10) auf einen vorbestimmten Zustand anspricht;

- ein mit dem Leistungsschalter (10) lösbar verbundenes Anzeigegerät (16, 17) zur Bereitstellung einer vorbestimmten sichtbaren Anzeige aufgrund einer Auswertung einer vorbestimmten Ausgangsgröße aus der genannten Schaltung (20).

2. Anzeigeeinrichtung nach Anspruch (1), **dadurch gekennzeichnet**, daß das Anzeigegerät (16, 17) eine mit dem Leistungsschalter (10) durch eine Steckverbindung lösbar verbundene Anzeigeeinheit (16) aufweist, wobei die Steckverbindung (2) in Eingriff bringbare Teile aufweist, von denen der eine Teil mit der Anzeigeeinheit (16) und der andere Teil mit dem Leistungsschalter (10) verbunden ist.

3. Anzeigeeinrichtung nach Anspruch 1, **dadurch gekennzeichnet**, daß die Anzeigeeinheit (16) zusammen mit der Schaltung (20) an einer durchsichtigen und von der Frontseite des Leistungsschalters (10) abnehmbar ausgebildeten Abdeckung (17) angebracht ist, die als Abdeckung der Einstellorgane (15) der Auslöseeinheit des Leistungsschalters (10) und gegen ein normales Kunststoffenster auswechselbar ausgebildet ist.

4. Anzeigeeinrichtung nach Ansdpruch 1, **dadurch gekennzeichnet**, daß die Anzeigeeinheit (16) eine Flüssigkristallanzeige zur Darstellung von zwei Zeichen enthält.

5. Anzeigeeinrichtung nach Anspruch 1, **dadurch gekennzeichnet**, daß die Anzeigeeinheit (16) eine LED-Anzeige zur Darstellung von zwei Zeichen aufweist.

6. Anzeigeeinrichtung nach Anspruch 1, **dadurch gekennzeichnet**, daß als Ausgangsgröße ein von der Auslöseeinheit des Leistungsschalters (10) ausgegebenes Datensignal für den Auslösestatus dient und daß eine Überwachungsschaltung (22) für das Datensignal vorgesehen ist, die das Signal aufgrund eines vorgewählten Zustandes des Leistungsschalters (10) festhält und eine weitere Ausgangsgröße erzeugt, wobei eine Decodierungsschaltung (24) für die weitere Ausgangsgröße der Überwachungsschaltung (22) zur Bereitstellung einer Steuergröße zur selektiven Ansteuerung der Anzeigeeinheit (16) vorgesehen ist.

7. Anzeigeeinrichtung nach Anspruch 6, **dadurch gekennzeichnet**, daß das Datensignal für den Auslösestatus erste, zweite und dritte Datensignale umfaßt und wobei die Überwachungsschaltung (22) einen ersten, einen zweiten und einen dritten Flip-Flop (30, 32, 34) zur Aufnahme der ersten, zweiten und dritten Datensignale aufweist und wobei einander komplementäre Ausgangsgrößen ausgegeben werden.

8. Anzeigeeinrichtung nach Ansdpruch 7, **dadurch gekennzeichnet**, daß eine Taktschaltung (40) sowie ein UND-Gatter (38) vorgesehen sind, dessen Ausgang mit dem Takteingang jedes der Flip-Flops (30, 32, 34) verbunden ist und das einen mit der Taktschaltung (40) ver bundenen Eingang besitzt, wobei der andere Eingang mit einem oder mehreren der Flip-Flops (30, 32, 34) vebunden ist, wodurch Taktimpulse für die Flip-Flops (30, 32, 34) selektiv gesteuert und die Flip-Flops (32, 32, 34) gesperrt werden (latch).

9. Anzeigeeinrichtung nach Anspruch 7, **dadurch gekennzeichnet**, daß die Decodierungseinrichtung (24) eine Vielzahl von UND-Gattern (42, 44, 46, 48) mit drei Eingängen umfaßt, die mit den Ausgängen der Flip-Flops (30, 32, 34) verbunden sind und deren Ausgänge einer Vielzahl von ODER-Gattern (50, 52, 54, 56, 58) eingegeben werden, wodurch eine vorgewählte Kombination von Datensignalen eine vorgewählte Ausgangsgröße an den ODER-Gattern erzeugt.

10. Anzeigeeinrichtung nach Anspruch 6, **dadurch gekennzeichnet**, daß zum Empfangen und Festhalten des Datensignals, zur Bildung der Decodierungsschaltung und zur Abgabe der Steuergrößen für die Anzeigeeinheit ein integrierter programmierbarer Vielfach-Verknüpfungsbaustein dient, wobei eine Taktschaltung sowohl zur Ansteuerung des Verknüpfungsbausteins als auch zur Abgabe von Taktimpulsen an die Anzeigeeinheit (16) vorgesehen ist.

FIG. 1

FIG. 2

FIG. 3

FIG. 6

| | |
|---|---|
| | KONFIGURATION DER SEGMENTE |
| | ZUSTAND: AUSLÖSEVERZÖGERUNG FÜR ÜBERLAST LÄUFT (ANZEIGE BLINKT) |
| | ZUSTAND: AUSLÖSUNG DURCH ÜBERLAST (ANZEIGE STETIG) |
| | ZUSTAND: AUSLÖSUNG DURCH KURZSCHLUSS (ANZEIGE STETIG) |
| | ZUSTAND: AUSLÖSUNG DURCH ERDSCHLUSS (ANZEIGE STETIG) |

FIG 4

0226530
85 P 9189

0226530

85 P 9189

FIG. 5